# EUROPÄISCHE PATENTANMELDUNG

(11) **EP 0 739 846 A1**
(43) Veröffentlichungstag der Anmeldung: **30.10.1996**
(21) Anmeldenummer: 95810273.3
(22) Anmeldetag: 25.04.1995
(51) Int. Cl.: B65H 45/20, B21D 13/04

(54) **Vorrichtung zur Herstellung eines schrägplissierten Materialstreifens**

(71) Anmelder: Sulzer Chemtech AG, CH-8404 Winterthur (CH)
(72) Erfinder: Süess, Philipp, CH-8413 Neftenbach (CH); Bär, Martin, CH-8442 Hettlingen (CH); Stöckli, Xaver, CH-8805 Richterswil (CH); Stöckli, Rainer, CH-8834 Schindellegi (CH)
(74) Vertreter: Heubeck, Bernhard

(57) **Zusammenfassung**

Die Vorrichtung zur Herstellung eines schrägplissierten Materialstreifens (2b) umfasst ein Paar von parallel angeordneten, ineinander greifenden Zahnwalzen (10a, 10b). Ein schräg zu den Walzenachsen zugeführter, aus einem folienartigen Material bestehender Streifen (2a) lässt sich zickzackartig falten. Erfindungsgemäss sind die Zähne (12) Teile von beweglichen Stangen (120), die in Nuten (13) eines Walzenkörpers (11) axial verschiebbar sind. Es sind Führungsmittel (14, 15) für die Stangen (120) derart vorgesehen sind, dass aufgrund einer Zwangsführung der Stangen der Materialstreifen (2a, 2b) bei der Bearbeitung auf einer raumfesten Bahn transportierbar ist.

## Beschreibung

Die Erfindung betrifft eine Vorrichtung zur Herstellung eines schrägplissierten Materialstreifens gemäss Oberbegriff von Anspruch 1. Die Erfindung betrifft auch ein Verfahren, das mit einer derartigen Vorrichtung durchführbar ist.

Beim "Schrägplissieren" eines streifenförmigen folienartigen Materials wird eine zickzackförmige Faltung hergestellt, wobei in der Regel die Faltkanten mit der Laufrichtung des Streifens meist einen Winkel zwischen rund 30° und 60° einschliessen.

Schrägplissierte Folien oder Bleche werden beispielsweise als Bauelemente für die Herstellung von geordneten Packungen für Stoff- und Wärmeaustauschkolonnen oder von Katalysatorträgern verwendet. Ein einzelnes Bauelement bildet dabei eine Lage der Packung. Durch die alternierende Anordnung von Lagen, deren Faltkanten sich kreuzen, erhält man eine Packung mit offener Kreuzkanalstruktur.

Es ist bekannt, plissierte Folien oder Bleche mit zahnradartigen Walzen herzustellen. Dieses Herstellverfahren hat den Nachteil, dass der Materialstreifen bei der Bearbeitung im Walzenpaar eine axiale Verschiebung erfährt. Der Transport des Streifens in die Vorrichtung muss daher über einen Führungsschlitten ausgeführt werden, welcher periodisch in eine Anfangsposition gebracht werden muss, von der er anschliessend während des Plissierens parallel zu den Walzenachsen in eine Endposition verschoben wird. Dieser Umstand, dass ein Führungsschlitten zu verwenden ist, macht ein kontinuierliches Verfahren unmöglich.

Es ist Aufgabe der Erfindung, eine Vorrichtung zu schaffen, mit der eine Plissierung kontinuierlich vorgenommen werden kann. Diese Aufgabe wird durch die in Anspruch 1 genannten Merkmale gelöst.

Die Ansprüche 2 bis 8 beziehen sich auf vorteilhafte Ausführungsformen der erfindungsgemässen Vorrichtung. Die Ansprüche 9 bis 11 haben das Plissierverfahren zum Gegenstand.

Nachfolgend wird die Erfindung anhand der Zeichnungen erläutert. Es zeigen:
- Fig. 1: ausschnittsweise einen Querschnitt durch eine bekannte Plissierwalze,
- Fig. 2: Draufsicht auf eine bekannte Plissierwalze,
- Fig. 3: eine Hilfsfigur für geometrische Erläuterungen,
- Fig. 4: ausschnittsweise eine Draufsicht auf einen teilweisen plissierten Materialstreifen,
- Fig. 5: ein Schrägbild des Streifens aus Fig.4,
- Fig. 6: ausschnittsweise eine erfindungsgemässe Plissierwalze, teils als Draufsicht, teils als Längsschnitt,
- Fig. 7: einen Querschnitt durch die Plissierwalze der Fig.6 im Bereich der Zähne,
- Fig. 8: ein Konstruktionsdetail zur Walze der Fig.6,
- Fig. 9: einen Querschnitt durch eine erfindungsgemässe Plissierwalze, bei der zwei Zähne auf einer gemeinsamen Stange angeordnet sind, und
- Fig.10a,b: Arbeitsphasen einer erfindungsgemässen Plissierwalze.

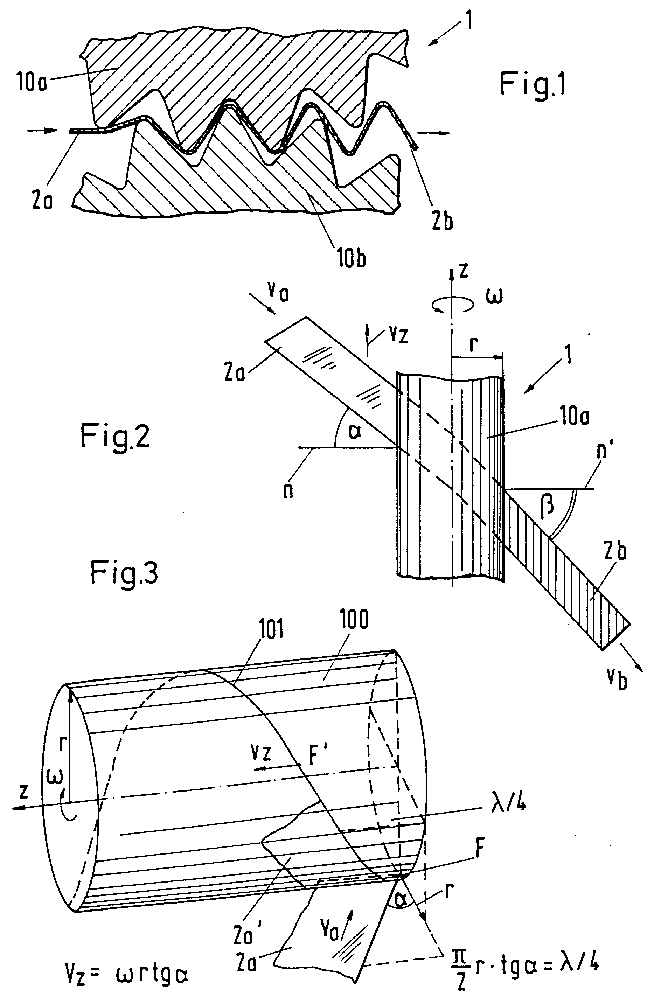

Die Plissierwalze 1 der Fig.1 umfasst ein Walzenpaar mit einer obere Zahnwalze 10a und einer unteren Zahnwalze 10b. Ein Streifen 2a aus einem folienartigen Material wird in der Plissierwalze 1 zu einem plissierten Streifen 2b umgeformt. Wie die Fig.2 zeigt, wird der Streifen 2a unter einem Eintrittswinkel α in die Plissierwalze 1 zugeführt. Der plissierte Streifen 2b tritt unter einem Austrittswinkel β aus der Plissierwalze 1 aus, der aufgrund der Plissierung grösser als α ist. Die Winkel α und β werden bezüglich den Normalen n und n' gemessen, die senkrecht zur Walzenachse z stehen. Die Eintrittsgeschwindigkeit vₐ des Streifens 2a ist offensichtlich grösser als die Austrittsgeschwindigkeit v_{b}.

Während des Plissierens erfährt der Materialstreifen 2a eine axiale Verschiebung mit einer zu vₐ proportionalen Geschwindigkeit v_{z}. Zur Erläuterung dieser axiale Verschiebung dient die Hilfsfigur 3, in der eine zahnlose Walze 100 zu sehen ist. Der Punkt F stellt die Stelle am rechten Rand des Streifens 2a dar, an der die Plissierung stattfindet. Beim Rotieren der Walze 100 bewegt sich dieser Punkt - jetzt mit F' bezeichnet - in z-Richtung entlang der schraubenförmigen Kurve 101. Diese Kurve 101 erhält man durch Aufwickeln des Streifens 2a auf der Oberfläche der Walze 100 (aufgewickelter Streifen 2a'). Dreht die Walze 100 (Walzenradius r) mit der Winkelgeschwindigkeit ω, so bewegt sich der Punkt F bzw. F' in der Achsrichtung mit der Geschwindigkeit v_{z}, die proportional zu Umfangsgeschwindigkeit r·ω ist, wobei der Proportionalitätsfaktor tgα beträgt.

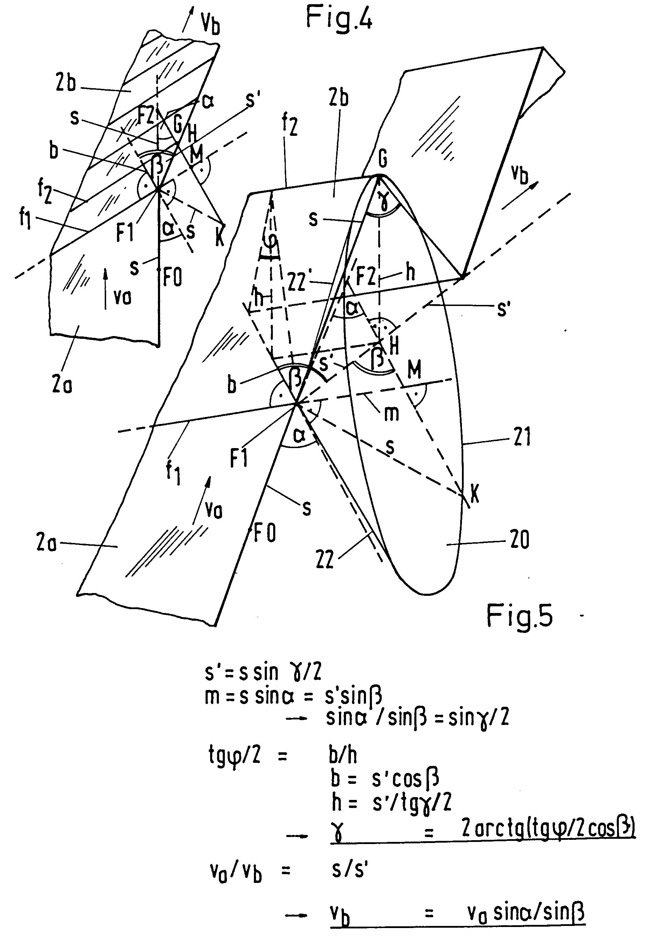

Anhand der Figuren 4 und 5 werden die geometrischen Verhältnisse, die mit der Plissierung zusammenhängen, erläutert. Dabei handelt es sich selbstverständlich um idealisierte Verhältnisse, nämlich solchen, die sich bei Vernachlässigung der Foliendicke und unter Annahme von perfekt ebenen Teilflächen sowie scharfen, nicht abgerundeten Faltkanten ergeben. In der Praxis werden Korrekturfaktoren benötigt, die mit Vorteil empirisch bestimmt werden.

Fig.5 zeigt den Streifen 2a, 2b aus der Sicht gemäss Pfeil V in Fig.4. Der Streifen 2a geht bei der Faltkante f₁, die nur teilweise ausgebildetet ist, in das plissierte Stück 2b über. Die Kante f₁ schneidet den rechten Rand des Streifens im Punkt F1. Der Punkt F0 gibt die Stelle an, an der die nachfolgende Faltung vorgenommen wird. Der Abstand zwischen F0 und F1 beträgt s. Zur Vornahme der Faltung wird F0 in F1 verschoben, wobei gleichzeitig F1 auf den Punkt F2 zu liegen kommt. In Fig.5 ist F2 der Punkt, der nach der Plissierung als Randpunkt G erscheint. Die Faltkante f₂ durch G ist im Gegensatz zu f₁ voll ausgebildeten. Die Punkte F2 und G liegen auf dem Grundkreis 21 eines Kegels 20, dessen Spitze in F1 liegt. Die seitlichen Konturen des Kegels 20 sind durch die beiden Strecken 22 und 22' dargestellt (deren Längen gleich s sind). M ist der Mittelpunkt des Kreises 21, der im Abstand m von F1 - weiter hinten - liegt. H ist der Fusspunkt der Normalen durch G auf dem Kreisdurchmesser, dessen Endpunkte die beiden Punkte F2 und K sind. Der Abstand h zwischen G und H ist die Höhe einer Faltung der Plissierung. Der Abstand s' zwischen F1 und H ist die Normalprojektion von s auf die Ebene, in der sich der Streifen 2a befindet. φ ist der Faltwinkel und γ ist der entsprechende Winkel, der am Rand des Streifens 2b bei G aufgespannt wird.

In Fig.5 sind die Beziehungen zwischen den verschiedenen in den Figuren 4 und 5 angegebenen geometrischen Grössen zusammengestellt. Aus den zwei ersten unterstrichenen Beziehungen lässt sich α als eine Funktion von β und φ ableiten. Diese beiden Grössen β und φ sind nebst der Länge s die für den plissierten streifen charakteristischen Parameter.

Die dritte unterstrichene Beziehung in Fig.5 gibt das Verhältnis zwischen den beiden Transportgeschwindigkeiten vₐ und v_{b} an. Auch dieses Verhältnis lässt sich als Funktion von den beiden Parameter β und φ ausdrücken.

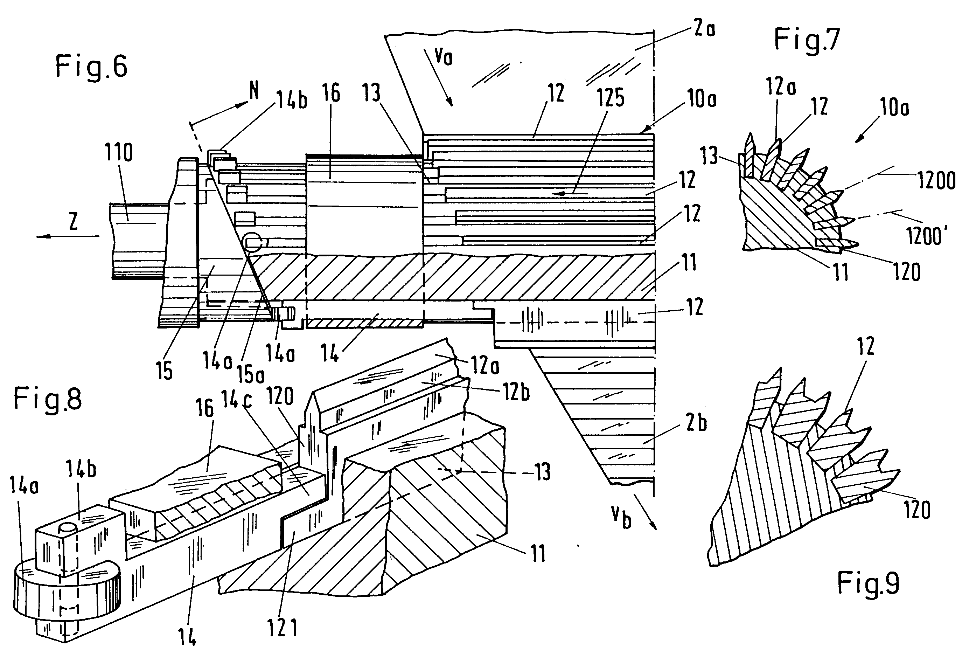

Die erfindungsgemässe Zahnwalze 10a der Figuren 6 und 7 weist bewegliche Stangen 120 mit Zähnen 12 auf, welche in Nuten 13 im Walzenkörper 11 axial verschiebbar sind. Die Zahnspitzen 12a sind V-förmig und weisen jeweils einen abgerundeten Scheitel auf. Der Scheitel schliesst einen Winkel im Bereich zwischen rund 40° und 60° ein. Das Schrägbild der Fig.8 zeigt eine Stange 120, die eine durch seitliche Ausnehmungen 12b modifizierte Spitze 12a hat. Die radialen Mittelebenen 1200 und 1200' benachbarter Zähne 12 schliessen jeweils einen Winkel von rund 15° ein.

Es sind Führungsmittel 14, 15 für die Stangen 120 derart vorgesehen sind, dass der Materialstreifen 2a bei der Bearbeitung auf einer raumfesten Bahn transportierbar ist, d.h. dass aufgrund einer Zwangsführung der Stangen 120 die axiale Geschwindigkeit v_{z} (siehe Fig.2) gleich Null ist. Die Führungsmittel einer Zahnwalze umfassen zwei raumfeste Laufflächen 15a für Rollen 14, die an den beiden Enden der Walze 10a angeordnet sind. Jeder Stange 120 sind für deren Zwangsführung zwei Rollen 14 zugeordnet. In Fig.6 ist nur eine Seite der Walze 10a mit den zugehörigen Führungsmitteln dargestellt. Die andere Seite der Walze 10a ist entsprechend ausgebildet.

Im dargestellten Ausführungsbeispiel sind die Rollen 14a jeweils Teil eines Stösselelements 14, das in der gleichen Nut 13 wie die zugeordnete Stange 120 bewegbar ist. Wie in Fig.8 zu sehen ist, ist das Stösselelement 14 mit der Stange 120 formschlüssig verbunden, nämlich über ein Nasenstück 14c des Stösselelements 14 und ein Fussstück 121 der Stange 120. Die Rolle 14a ist an einem Endstück 14b des Stösselelements 14 angeordnet. Der Walzenkörper 11 ist im Bereich der Stösselelemente 14 von einem Rohrstück 16 umschlossen, das zusammen mit den Nuten 13 längsseitig geschlossene Führungskanäle für die Stösselelemente 14 bilden.

Der Pfeil 125 in Fig.6 gibt die Bewegungsrichtung der sichtbaren Zähne 12 an. Auf der nicht sichtbaren Seite der Walze 10a, d.h. auf der Arbeitsseite, ist die Bewegungsrichtung entgegengesetzt. Die Geschwindigkeit der Zähne ist so auf die Bewegung (vₐ) der Folie abgestimmt, dass diese keine transversale Bewegung in Richtung der z-Achse erfährt.

Die Lauffläche 15a der Rollen 14a ist durch ein schräg angeschnittenes Rohrstück 15 hergestellt worden. Sie liegt in einer Ebene, deren Normale N einerseits parallel zum Streifen 2a ist und andererseits senkrecht zu vₐ, d.h. senkrecht zur Transportrichtung des Streifens 2a vor dem Eintritt in das Walzenpaar. Das Rohrstück 15 ist raumfest angeordnet; es steht daher mit der Antriebswelle 110 und dem Walzenkörper 11 in keiner festen Verbindung.

Es sind auch andere Ausführungsformen der Lauffläche denkbar. Es muss nur dafür gesorgt werden, dass sich die Zähne 12 in ihrem Arbeitsbereich gleich bewegen wie im beschriebenen Beispiel mit ebener Lauffläche.

Es ist auch möglich zwei oder mehr Zähne 12 pro Stange 120 vorzusehen. Dies ist in Fig.9 illustriert.

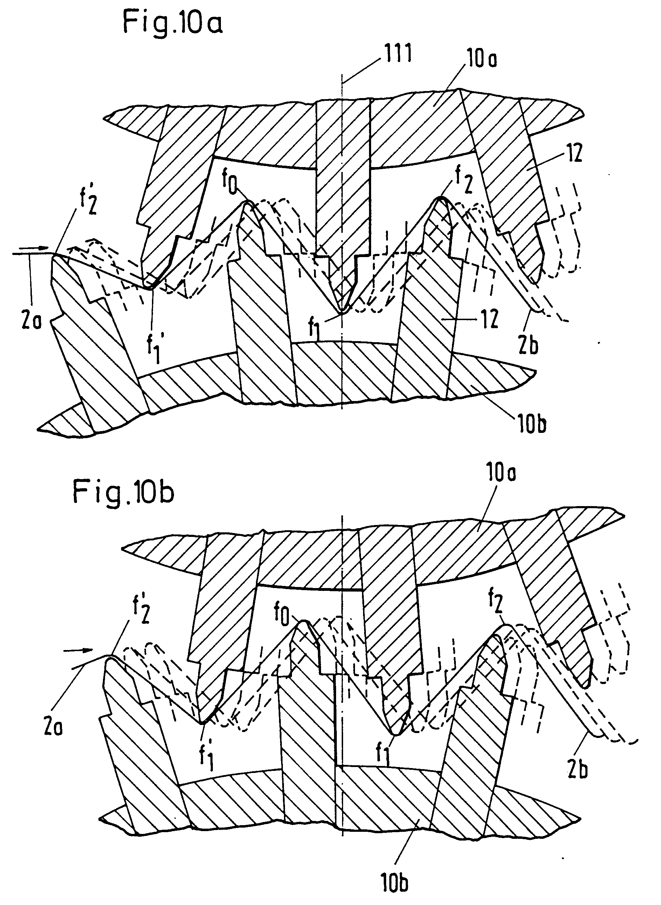

Bei der in den Figuren 10a und 10b dargestellten Plissierung einer Folie 2a befindet sich zunächst - ausgezogene Linie in Fig.10a - eine tiefliegende Faltkante f₁ auf der Mittellinie 111 des Walzenpaars. Zwei folgende Phasen sind gestrichelt angedeutet. Fig.10b zeigt die Fortsetzung, wobei die ausgezogene Linie die erste der drei Arbeitsphasen darstellt. Bei dieser Fortsetzung gelangt die obenliegende Faltkante f₀ auf die Mittellinie 111: Es liegt eine Situation vor, die zur ersten Phase der Fig.10a spiegelbildlich ist. Während den dargestellten Arbeitsphasen löst sich die Faltkante f₂ von der Spitze des zugeordneten Zahns 12. Die Faltkanten f₁' und f₂' werden neu ausgebildet.

Wird ein folienartiges Material, das eine Dicke im Bereich zwischen 0.01 und 0.5mm aufweist, mit einer erfindungsgemässen Vorrichtung plissiert, so kann dies mit einer Drehzahl der Walzen von mehr als 1000 Umdrehungen pro Minute geschehen. Dies bedeutet, dass pro Minute eine Anzahl Faltkanten im Bereich zwischen 10⁴ und 10⁵ hergestellt werden kann.

## Patentansprüche

1. Vorrichtung zur Herstellung eines schrägplissierten Materialstreifens (2b), welche Vorrichtung ein Paar von parallel angeordneten, ineinander greifenden Zahnwalzen (10a, 10b) umfasst, mit deren Zähnen eine Zickzackfaltung an einem schräg zu den Walzenachsen zugeführten, aus einem folienartigen Material bestehenden Streifen (2a) erzeugbar ist,
dadurch gekennzeichnet, dass die Zähne (12) Teile von beweglichen Stangen (120) sind, die in Nuten (13) jeweils eines Walzenkörpers (11) axial verschiebbar sind und dass Führungsmittel (14, 15) für die Stangen (120) derart vorgesehen sind, dass aufgrund einer Zwangsführung der Stangen der Materialstreifen (2a, 2b) bei der Bearbeitung auf einer raumfesten Bahn transportierbar ist.

2. Vorrichtung nach Anspruch 1, dadurch gekennzeichnet, dass die Führungsmittel (14, 15) einer Zahnwalze (10a, 10b) zwei raumfeste Laufflächen (15a) für Rollen (14a) umfassen, die an den beiden Enden der Walze angeordnet sind und dass jeder Stange (120) für deren Zwangsführung zwei Rollen (14a) zugeordnet sind.

3. Vorrichtung nach Anspruch 2, dadurch gekennzeichnet, dass die Rollen (14a) jeweils Teil eines Stösselelements (14) sind, welches in der gleichen Nut (13) wie die zugeordnete Stange (120) bewegbar ist und welches mit der Stange formschlüssig verbunden ist.

4. Vorrichtung nach Anspruch 3, dadurch gekennzeichnet, dass die Walzenkörper (11) im Bereich der Stösselelemente (14) von Rohrstücken (16) umschlossen sind, die zusammen mit den Nuten (13) längsseitig geschlossene Führungskanäle für die Stösselelemente bilden.

5. Vorrichtung nach einem der Ansprüche 2 bis 4, dadurch gekennzeichnet, dass die Laufflächen (15a) der Rollen (14a) jeweils durch ein schräg angeschnittenes Rohrstück (15) gebildet sind, wobei die Lauffläche in einer Ebene liegt, deren Normale (N) einerseits parallel zum Streifen (2a) und andererseits senkrecht zur Transportrichtung (vₐ) des Streifens vor dem Eintritt in das Walzenpaar (10a, 10b) ist.

6. Vorrichtung nach einem der Ansprüche 1 bis 5, dadurch gekennzeichnet, dass die Zahnspitzen (12a) V-förmig sind sowie jeweils einen abgerundeten Scheitel aufweisen und dass der Scheitel einen Winkel im Bereich zwischen rund 40° und 60° einschliesst.

7. Vorrichtung nach einem der Ansprüche 1 bis 6, dadurch gekennzeichnet, dass die radialen Mittelebenen (120) benachbarter Zähne (12) jeweils einen Winkel von rund 15° einschliessen.

8. Vorrichtung nach einem der Ansprüche 1 bis 7, dadurch gekennzeichnet, dass jeder Stange (120) zwei oder mehr Zähne (12) zugeordnet sind.

9. Verfahren zum Herstellen eines schrägplissierten Materialstreifens, wobei ein folienartiges Material mit einer Vorrichtung nach einem der Ansprüche 1 bis 8 bearbeitet wird.

10. Verfahren nach Anspruch 9, dadurch gekennzeichnet, dass pro Minute eine Anzahl Faltkanten im Bereich zwischen 10⁴ und 10⁵ hergestellt wird.

11. Verfahren nach Anspruch 10, dadurch gekennzeichnet, dass das folienartige Material eine Dicke im Bereich zwischen 0.01 und 0.5 mm aufweist.
